# EUROPEAN PATENT APPLICATION

(11) **EP 3 848 135 A1**
(43) Date of publication of application: **14.07.2021**
(21) Application number: 20151191.2
(22) Date of filing: 10.01.2020
(51) Int. Cl.: B22F 3/105, B29C 64/153, B29C 64/40, B33Y 10/00

(54) **SCANNING STRATEGY FOR VOLUME SUPPORT IN ADDITIVE MANUFACTURING**

(71) Applicant: Siemens Aktiengesellschaft, 80333 München (DE)
(72) Inventor: Heitmann, Timo, 10245 Berlin (DE); Geisen, Ole, 10781 Berlin (DE); Albert, Johannes, 13357 Berlin (DE); Hajduk, Michael, 12059 Berlin (DE); Müller, Vinzenz, 10559 Berlin (DE)

(57) **Abstract**

A method of additive manufacturing of the component is presented. The method comprises, a), providing a component (10) geometry with a hole (11) and, b), selectively irradiating a powder bed (P) with an energy beam according to said geometry in a layerwise manner, wherein in layers (L) of the component (10) including the hole (11), the respective regions which define the hole (11) are irradiated with the energy beam such that a supporting structure (12) is generated in the hole (11) having a lower rigidity than a structure of the component (10). Furthermore, a use of the supporting structure for counteracting stress or distortion during the additive buildup and a computer program product as well as an apparatus corresponding to said method are presented.

## Description

The present invention relates to a method of additive manufacturing a component, particularly a scanning strategy for generating a supporting structure, therefore. Moreover, a use of said supporting structure for mechanically counteracting stress and/or distortion during the additive buildup as well as a computer program product and an apparatus corresponding to said method are subject of the present invention.

Particularly the presented method relates to so-called powder bed fusion (PBF). Such PBF techniques comprise e.g. selective laser melting (SLM), selective laser sintering (SLS) or electron beam melting (EBM).

A method of selective laser melting is described in EP 2 601 006 B1, for example.

Furthermore, the mentioned component preferably denotes a high-performance component, such as a component applied in power generation, aerospace or the automotive business sector. The component may as well be a component of a turbo machine, e.g. in the flow path hardware of a gas turbine. The component is, thus, preferably made of a nickel-or cobalt-based superalloy.

Additive manufacturing, particularly powder-bed methods have proven to be promising for the fabrication of prototypes or complex components, such as components of mazelike or filigree design, or functionally cooled components. Further, the additive manufacture stands out for its short chain of process steps which in turn enables material economization and a particularly low lead time.

Further additive manufacturing (AM) approaches relate to "Directed Energy Deposition (DED)", such as laser cladding, electron beam or plasma welding, metal inkjet molding (MIM), so-called sheet lamination methods, or thermal spraying (VPS LPPS) or cold spray (GDCS).

Apparatuses or setups for the intended AM methods usually comprise a manufacturing or build platform on which the component is built layer-by-layer after the feeding of a layer of base material which may then be melted, e.g. by an energy beam, such as a laser, and subsequently solidified. The layer thickness is determined by a recoater that automatically distributes a required layer of a powdery material on a manufacturing plane and removes excess material from the build space. Typical layer thicknesses amount to between 20 µm and 40 µm.

During the manufacture, said energy beam scans over the surface and melts the powder on selected areas which may be predetermined by a CAD-file according to the geometry of the component to be manufactured. Said scanning or irradiation is preferably carried out in a computer-implemented way or via computer aided means, such as computer aided manufacturing (CAM) instructions, which may be present in the form of a dataset. Said dataset or CAM file may be or refer to a computer program or computer program product.

A computer program product as referred to herein may relate to computer program means constituting or comprising a storage medium like a memory card, a USB stick, a CD-ROM, a DVD or a file downloaded or downloadable from a server or network. Such product may be provided by a wireless communication network or via transfer of the corresponding information by the given means. The computer program product may include a computer-readable storage medium storing applications, programs, program modules, scripts, source code, program code, object code, machine code, executable instructions, and/or the like. Such media include all computer-readable media, including volatile and non-volatile media.

Specific support strategies in AM and their manufacture for supporting overhanging faces (so-called "downskin" faces) in additive manufacturing approaches are e.g. shown in EP 3 278 908 A1. Therein, a solution is provided of how to cope with the major limitations of design freedom in additive manufacturing which arise from the defined vertical build direction and the necessity to support overhangs or cavities mechanically as well as for the discharge of excess heat from the buildup.

Laser or electron-beam-based methods provide the possibility of producing holes or cavities in complex components with stocking less material as compared to conventional manufacturing route. However, aside from the mentioned difficulty in generating downskin faces at high quality, reworking or post-processing of said faces is in most cases necessary due to inherent inaccuracies and large thermal stresses and/or distortion, the so-produced components suffer from. Said reworking is of course very complicated, costly and time-consuming as long as rigid high-performance materials are concerned (cf. above).

A small movement or distortion which may arise during the process (in-situ) and/or in a post-buildup heat treatment may thereby lead to a deflection or misalignment of holes, channels or cavities as compared to the aimed or target design. Said distortion may, however, render the component and unusable for its intended use. This problem does even occur for channel holes which are aligned parallel to the vertical buildup direction and are, thus, not restricted by the limitations of overhangs.

It is an object of the present invention to provide means which allow to improve or maintain dimensional accuracy of the component, particularly with regard to internal holes or cavities, during the additive buildup or subsequent post-processing steps.

The mentioned object is achieved by the subject-matters of the independent claims. Advantageous embodiments are subject-matters of the dependent claims.

An aspect of the present invention relates to a method of additive manufacturing of the component comprising providing a component geometry, such as in form of a CAD-file, with a hole or a channel extending through the bulk of the component.

The method further comprises selectively irradiating a powder bed of a base material, such as a powder, with an energy beam according to the mentioned geometry in a layerwise manner, wherein in layers of or for the component including the hole(s), the respective (powder) regions which define the hole - and which may conventionally not be exposed by the energy beam but spared from an irradiation - are deliberately irradiated with the energy beam such that a supporting structure is generated in the hole having a lower rigidity than a final structure of the component. Expediently, the supporting structure has therefore e.g. a greater porosity or can be reworked or machined more easily than the structure of the component.

The step of selectively irradiating pertains to the corresponding scanning strategy for the additive buildup and may be defined in a computer-implemented way, such as by computer aided manufacturing (CAM) means. In a corresponding CAM-procedure preferably also the (vertical) slicing of the component's geometry and different layers is carried out, and, optionally, a coordination of the relevant manufacturing or irradiation parameters is done.

The mentioned energy beam is preferably a laser beam or an electron beam. Both embodiments or device hardware approaches likewise allow for manifesting the presented inventive advantages.

Irrespective of the question whether a mechanical or "thermal" (cf. above) support of overhanging regions is achieved by the presented supporting structure, the latter advantageously allows for a so-called "volume" support of the hole region(s) of the component such that dimensional accuracy of alignment of said hole(s) - possibly as compared to the aimed or target geometry - can be improved. Thereby, of course, a major quality improvement of the given additive manufacturing technology (PBF) is provided which particularly allows to improve its reproducibility as well as efficiency and to reduce wastage.

In an embodiment, the supporting structure comprises a volume density or relative density in a range between 90% and 94%. According to this embodiment, the lower rigidity of the supporting structure as compared to the structure of the component is achieved.

In an embodiment, the supporting structure comprises a porosity in a range between 6% and 10%. Likewise, this embodiment allows to establish the lower rigidity of the supporting structure as compared to the structure of the component.

In an embodiment, the hole extends substantially in a direction parallel to a e.g. vertical, buildup direction of the component. In this embodiment, the provided inventive advantages of the present disclosure manifest foremost. However, even if the whole extends partially or fully in a direction parallel to the powder bed plane (i.e. orthogonal to the buildup direction), the inventive advantages of mechanically supporting the hole, are present.

In an embodiment the regions are irradiated, such as defined by way of CAM, at a hatching distance being two to four times, such as three times, than that one chosen for the irradiation of the structure of the component. According to this scanning embodiment, an expedient and advantageous supporting structure can be achieved.

In an embodiment, the regions are irradiated at a scan speed being greater, such as two times greater, than that one chosen for the irradiation of the structure of the component. According to this scanning embodiment, an expedient and advantageous supporting structure can be achieved as well.

In an embodiment, an irradiation pattern for the regions is chosen such that scanning vectors of said pattern overlap with an irradiation pattern for the component or corresponding irradiation vectors, by about 100 µm or more. This embodiment advantageously allows to secure good structural or metallurgical connection to the component.

In an embodiment an undersize, such as between 100 µm and 400 µm in diameter, is accounted for the geometry of the hole (region) as compared to the predefined target geometry of the hole, or as the case may be, the component. In other words, this embodiment allows to "downsize" the hole with respect to the target (CAD) geometry. This embodiment allows advantageously to prevent occurrence of near-wall porosity, such as a porosity at the border or inner faces of the hole.

In an embodiment the raw material of the powder bed is a nickel- or cobalt-based superalloy, such as alloy 247 (CM 247 or Mar-M247), IN738, IN939 or Rene80.

In an embodiment the regions defining the hole in the as-manufactured and, optionally thermally post-treated, components are machined, such as substantiality machined-off or drilled afterwards. According to this embodiment the intended cavity can be revealed in the hole of the component and enabled for its intended use.

A further aspect of the present invention relates to a component manufactured or manufacturable according to the described method.

A further aspect of the present invention relates to the use of the described supporting structure for or predominantly for (mechanically) counteracting stress and/or distortion during the additive buildup of the component and/or during subsequent thermal post-processing.

A further aspect of the present invention relates to a computer program product comprising instructions which, when the program is executed by a computer or a data processing device, cause the computer to carry out the selective irradiating of the powder bed as described. Said computer program product or corresponding computer program may be executed as part of a CAM-procedure. Vice versa, said procedure may be part of or embedded in said computer program (product).

A further aspect of the present invention relates to an apparatus, such as a control or irradiation apparatus, comprising means for carrying out the selective irradiation of the powder bed, as described.

Advantages and embodiments relating to the described method and/or the described use may as well pertain or be valid with regard to the computer program product and/or the apparatus or device as described.

Further features, expediencies and advantageous embodiments become apparent from the following description of the exemplary embodiment in connection with the Figures.
Figure 1 indicates in a schematic sectional view an additive manufacturing device and the manufacture of a component by powder bed fusion.
Figure 2 indicates in a schematic perspective view a component geometry comprising a hole to be realised by additive manufacturing according to the present invention.
Figure 3 indicates in a simplified schematic details for a scanning strategy of the component of Figure 2.
Figure 4 indicates in a schematic, further details of the scanning strategy used for the manufacture of the component according to the present invention.
Figure 5 indicates, analogue to Figure 4, a scanning strategy used for the component which is aligned in an alternative directional relationship with regard to its buildup direction.
Figure 6 indicates by means of a schematic flow chart method steps of the present invention.

Like elements, elements of the same kind and identically acting elements may be provided with the same reference numerals in the figures. The figures are not necessarily depicted true to scale and may be scaled up or down to allow for a better understanding of the illustrated principles. Rather, the described Figures are to be construed in a broad sense and as a qualitative base which allows a person skilled in the art to apply the presented teaching in a versatile way.

The term "and/or" as used herein shall mean that each of the listed elements may be taken alone or in conjunction with two or more of further listed elements.

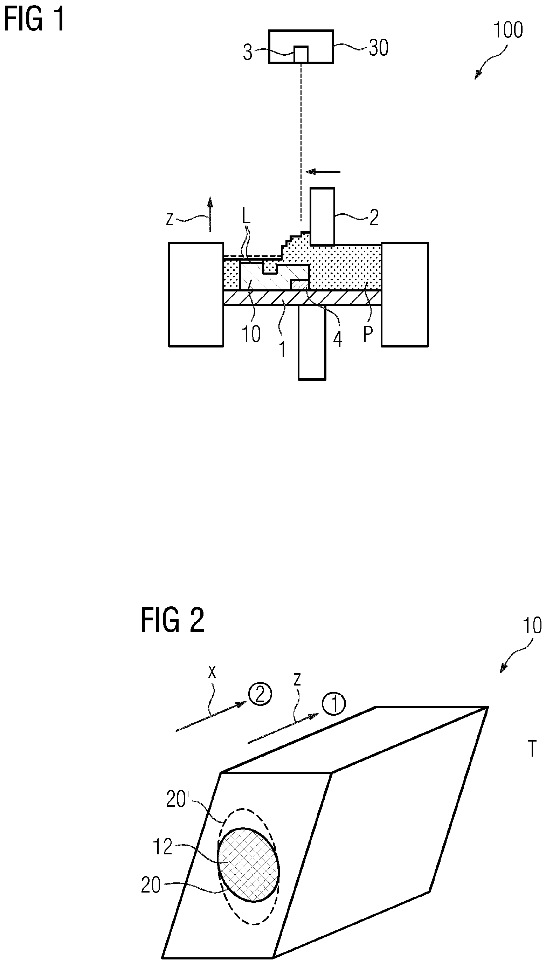

Figure 1 shows an additive manufacturing device 100. The device 100 is preferably set up for the manufacture of the component 10 by so-called powder bed fusion, encompassing selective laser sintering, selective laser melting and electron beam melting.

To this effect, the device 100 comprises a build platform 1. Onto the build platform 1, the component 10 is established layer-by-layer by depositing a layer L of a powdery base material P, such as by a recoater 2 and the subsequent (selective) irradiation by an energy beam or an irradiation device (cf. reference numeral 3). Said energy beam may be a laser or an electron beam. It is the inherent principle of this manufacturing route that the powder bed is irradiated only at locations where the structure for the component needs to be established according to a predetermined target geometry. This geometry may e.g. be provided by a CAD (computer aided manufacturing) file. After the irradiation of each layer, the platform is usually lowered by an amount corresponding to a layer thickness (cf. reference numeral L). It is owed by this functionality that the buildup direction of the component is positively the vertical z-direction.

Figure 2 shows a schematic perspective view of a geometry of the component 10 which is suitable to be additively manufactured in the described way. The indicated geometry images a central hole 20. For the sake of better illustration of the present invention, the design of the component of Figure 2 is oversimplified, and may in reality have very complex or filigree shape.

The hole 20 may be a channel for a cavity or may have the shape of a bore. Prior to the actual physical buildup, the geometry of the component is, preferably, provided by a CAD file which may be processed by the manufacturing device 100 and/or a control apparatus (see reference numeral 30 below).

During the additive buildup, small holes or cavities need normally not to be supported, such as mechanically supported or for enabling heat discharge. Larger holes or cavities, such as with dimensions of more than 10 mm may need a support depending on the aimed structural merits and dimensional accuracies.

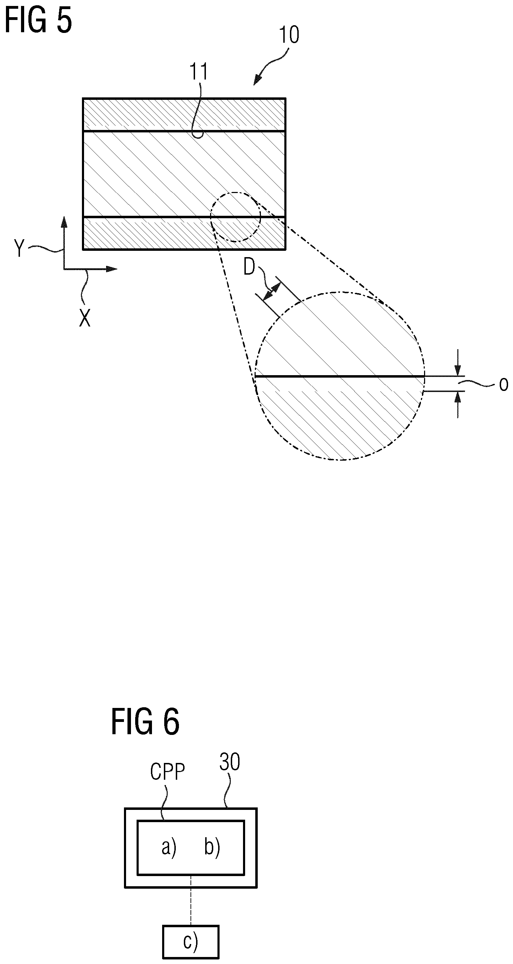

According to the present invention (cf. also Figure 6 below), a volume support strategy is provided which allows to generate a supporting structure 12 in the hole which has a lower rigidity than a structure of the component 10. The mentioned lower rigidity is indicated by the crosswise hatching of the region in the hole 20 and, advantageously allows for an easier re-working or mechanical machining of the region of the hole 20.

For instance, the supporting structure 12 may comprise a volume or relative density in a range between 90% and 94%. Further, the supporting structure 12 may in other words comprise a porosity in a range between 6% and 10%.

By a suitable choice of irradiation parameters, such as hatching distance, scanning speed and possibly further parameters, the structure of the supporting material in the hole 20 can be tailored (see below).

The aim of the supporting structure 12 is, according to the present invention, not the conventional known support strategy, such as for mechanically and "thermally" supporting downskin faces for the buildup. Rather the aim is to prevent the component 10 from being distorted either during the buildup or during subsequent thermal treatment, wherein the location of the hole which may be offset or misaligned.

Such misalignment or shift of either the overall position of the hole in the geometry of the component or a distortion of the shape or contour of the hole 20 as a consequence of thermal or thermomechanical load (cf. reference numeral T in Figure 2) is indicated by the dashed contour 20' in Figure 2.

Particularly for high-performance materials of superalloys and/or nickel-based or cobalt-based alloys, such deflection poses a major challenge, as the component at issue usually comprises a complex and filigree shape and, at the same time, requires a high degree of its dimensional accuracy. This purpose of the supporting structure 12 is served for almost any chosen build direction with regard to the component's geometry.

It is e.g. indicated in Figure 2 that the hole 20 may extend substantially or completely in a vertical z-direction (indicated with the corresponding arrow and the encircled "1").

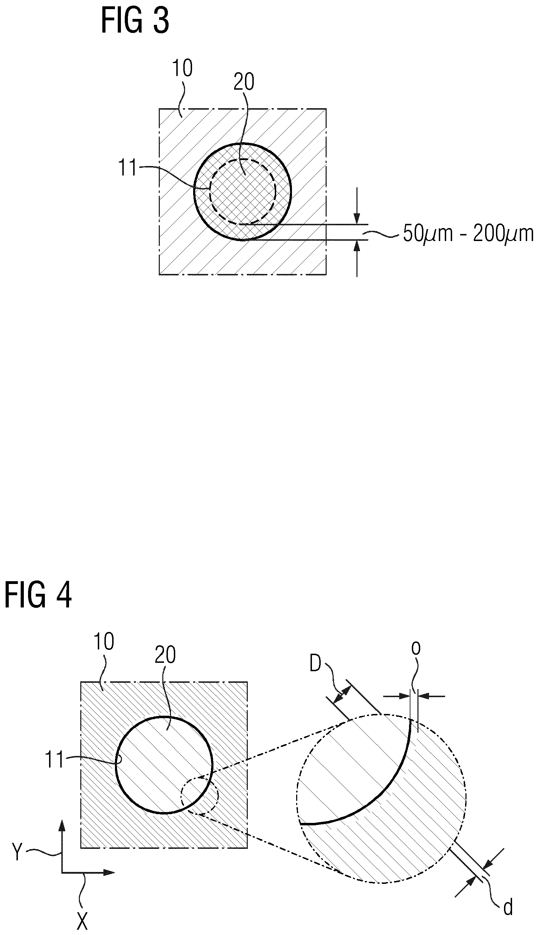

Likewise, it is contemplated by the present invention that the whole extends substantially in a horizontal (spatial) direction as indicated by the arrow x and the encircled number "2" (cf. also Figure 3 below).

Figure 3 indicates in a simplified schematic top view f a section of the component 10 including the hole 20. This indication, preferably, corresponds to the alternative 1 of Figure 2, wherein a main extension of the component 10 as well as the hole course is substantially parallel to the vertical z-direction (cf. also Figure 1). A border of the whole which may constitute or define in inner face of the component 10 is indicated with reference numeral 11.

For a proper or expedient irradiation of the different layers L of powdery material P in the region of the hole 20, it may be advantages to consider an undersize in the geometry of the component 10 as compared e.g. to the border 11 of the target geometry. Such undersize may e.g. amount to between 50 µm and 200 µm on each side of the contour of the hole region. Measured over the entire diameter, this may amount to an undersize of between 100 µm and 400 µm.

Figure 4 indicates in a schematic - analogue to the principle of Figure 3 - further details of the scanning strategy used for the manufacture of the component 10. For the sake of a better overview only, the region of the hole is filled only with simple hatching lines which shall indicate the different irradiation vectors for the generation of the supporting structure. By reference of the coordinate system in the lower left corner of Figure 4, it is apparent that the depicted situation is such that the main (longitudinal) extension of the hole 20 is aligned substantially parallel to the vertical z-direction.

Said scanning strategy, comprises a multiplicity of irradiation vectors which are indicated by the tilted hatching lines in Figures 4 and 5.

In the lower right corner of Figure 4, the difference in the irradiation or scanning strategy of the supporting structure 12 is apparent. As compared to the irradiation mode of the component 10, comprising a hatching distance d, the hatching distance D for the presented supporting structure 12 is e.g. two to four times, such as three times, greater. Absolute values for the hatching distance D may amount to between 50 µm and 500 µm, for example. As a consequence, e.g. a lower aerial energy density is put in the powder bed at the location of the hole 20. Thereby, in turn, the rigidity can be lowered as compared to the structure of the component 10.

Likewise a scanning speed v may be adapted such that in the regions of the hole 20, it is chosen to be greater, such as two times, than that one chosen for the irradiation of the structure of the component 10. Absolute values for the scanning speed may amount to between 1500 mm/s and 4500 mm/s, for example.

A lowered rigidity of the supporting structure 12 as compared to the structure of the component 10 can as well be achieved by exposing or irradiating only every second or third layer L of powder P with an energy beam.

In addition, as indicated by the magnified portion of the transition from the structure of the component to the supporting structure 12 (or its corresponding scanning pattern), it is apparent and contemplated that the scanning vectors of said pattern for the supporting structure 12 overlaps by a distance o of at least 100 µm or more with an irradiation pattern for the component 10. This particularly allows to secure good connection between the supporting structure 12 and the structure for the component 10 at said transition.

Figure 5 indicates, analogue to Figure 4, a scanning strategy used for the component which is aligned in an alternative directional relationship with regard to its buildup direction. By reference of the indicated coordinate system it is apparent that the depicted relationship of alignment of the hole with regard to the additive buildup corresponds to the alternative 2 of Figure 2. The overall technical improvement which may be achieved by the specific choice of the irradiation strategy of the supporting structure 12 (such as compared to a conventional strategy of a rigid structure) may be the same in this embodiment.

Particularly, the hatching distance D and the overlap o may be chosen relatively as described by way of the embodiment of Figure 4. Alternatively, the given values for the hatching distance D, the scanning speed v and/or the overlap o or further parameters may be chosen different from that one conducted for the structure as long as the rigidity of the supporting structure 12 in the region of the hole 20 is reduced.

Figure 6 indicates by way of a schematic of a simplified flowchart, a basic sequence of the method according to the present invention (cf. above). Said method is a method of additive manufacturing of the component 10 comprising, a), providing a component 10 geometry with a hole 11 and, b), selectively irradiating a powder bed P with the energy beam according to said geometry in a layerwise manner, wherein in layers L of the component 10 including the hole 11, the respective regions which define the hole 11 are irradiated with the energy beam such that a supporting structure 12 is generated in the hole 11 having a lower rigidity than a structure of the component 10.

These method steps may e.g. be carried out in the frame of a computer aided manufacturing (CAM) procedure and/or with a computer program product (cf. reference numeral CPP). Further, said procedure or according data may be stored in/or executed by an apparatus 30, such as a control and/or irradiation apparatus, e.g. comprising means for carrying out the selective irradiation of the powder bed P, as described.

Optionally the presented method may comprise, step c), machining, reworking or post-processing the regions defining the hole 10 in the as-manufactured and/or, optionally, further thermal treatment of the component 10.

The component 10 as referred to herein may particularly relate to a part or an article of complex shape, such as with filigree portions of structures. Preferably, said component is made of a high-performance material, such as a material of great strength and/or thermal resistivity stop particularly, said part may constitute a part of a steam or gas turbine component, such as a blade, vane, shroud, shield, such as heat shield, tip, segment, insert, injector, seal, transition, burner, nozzle, strainer, orifice, liner, distributor, dome, boost, cone, lance, plate, resonator, piston or any corresponding retrofit kit. Alternatively, said component may relate to another or similar component.

It is contemplated for the present invention that further process and/or irradiation parameter may be modified or chosen for the generation of the supporting structure, such as a layer thickness, a beam power or power density, wavelength, beam offset, spot diameter, beam angle or further machine controls.

The scope of protection of the invention is not limited to the examples given hereinabove. The invention is embodied in each novel characteristic and each combination of characteristics, which particularly includes every combination of any features which are stated in the claims, even if this feature or this combination of features is not explicitly stated in the claims or in the examples.

## Claims

**1.** Method of additive manufacturing of a component (10) comprising
- a) providing a component (10) geometry with a hole (11),
- b) selectively irradiating a powder bed (P) with an energy beam according to said geometry in a layerwise manner, wherein in layers (L) of the component (10) including the hole (11), the respective regions which define the hole (11) are irradiated with the energy beam such that a supporting structure (12) is generated in the hole (11) having a lower rigidity than a structure of the component (10).

**2.** Method according to claim 1, wherein the supporting structure (12) comprises a volume or relative density in a range between 90% and 94%.

**3.** Method according to claim 1 or 2, wherein the hole (11) extends substantially in a direction parallel to a buildup direction (z) of the component (10).

**3.** Method according to one of the previous claims, wherein the regions are irradiated at a hatching distance (D) being two to four times, such as three times, that one (d) chosen for the irradiation of the structure of the component (10).

**4.** Method according to one of the previous claims, wherein the regions are irradiated at a scan speed (v) being greater, such as two times, than that one chosen for the irradiation of the structure of the component.

**5.** Method according to one of the previous claims, wherein an irradiation pattern for the regions is chosen such that scanning vectors of said pattern overlap (o) with an irradiation pattern for the component by about 100 µm or more.

**6.** Method according to one of the previous claims, wherein an undersize, such as between 100 µm and 400 µm in diameter, is accounted for the geometry of the hole (10) as compared to the aim geometry thereof.

**7.** Method according to one of the previous claims, wherein a raw material (P) of the powder bed is a nickel- or cobalt-based superalloy.

**8.** Method according to one of the previous claims, wherein the regions defining the hole (10) in the as-manufactured and optionally thermally post-treated component are machined (c)).

**9.** Use of a supporting structure (12) according to one of the previous claims in the additive manufacture of a component (10) for mechanically counteracting stress and/or distortion during the additive buildup and/or thermal post-processing steps.

**10.** Computer program product (CPP) comprising instructions which, when the program is executed by a computer (30), cause the computer to carry out the selectively irradiating of the powder bed (P) according to one of the previous claims.

**11.** Apparatus (30), such as a control or irradiation apparatus, comprising means for carrying out the selective irradiation of the powder bed (P) according to one of the previous claims.
